# EUROPEAN PATENT SPECIFICATION

(11) **EP 2 729 239 B1**
(45) Date of publication and mention of the grant of the patent: **19.08.2015**
(21) Application number: 12740701.3
(22) Date of filing: 04.07.2012
(51) Int. Cl.: B01F 5/22, B01F 3/12, A21C 1/02, A21C 1/14

(54) **MIXER MACHINE AND MIXING METHOD**
MISCHMASCHINE UND MISCHVERFAHREN
MACHINE MÉLANGEUSE ET PROCÉDÉ DE MÉLANGE

(30) Priority: 04.07.2011 IT BS20110098
(43) Date of publication of application: 14.05.2014
(73) Proprietor: Sigma S.r.l., 25030 Torbole Casaglia, Brescia (IT); Rio, Hubert, 60300 Avilly Saint Leonard (FR)
(72) Inventor: GNOCCHI, Luciano, I-25088 Toscolano Maderno,Brescia (IT); RIO, Hubert, F-60300 Avilly Saint Leonard (FR)
(74) Representative: Chimini, Francesco
(86) International application number: PCT/IB2012/053401
(87) International publication number: WO 2013/005165

(56) References cited:
- EP-A2- 2 263 467
- WO-A1-2009/044712
- DE-C- 838 593
- SU-A1- 1 099 989
- US-A- 2 437 917
- US-A- 4 407 217
- US-A- 5 891 246

## Description

The present invention relates in general to a mixer machine for mixing at least one substance in powder with at least one liquid, and relates more particularly to a pre-mixing machine for mixing flour and water based compounds.

Existing mixer machines of powders and liquids require more or less contact time of the substance in powder with the liquid and often need re-processing steps which considerably increase mixing times.

In the bread-making sector, operations for making the dough generally comprise three steps. In a first step, the substances in powder and the liquids are placed in a recipient. In a second step the mixer tool rotates at a low speed to mix the ingredients with each other (pre-mixing step). In the third step the tool rotates at high speed to mix the mixed ingredients.

It is known of in the art to make mixing machines which receive the components of the mixture and mix them using turbines fitted with blades.

Usually, the machines of the prior art envisage the use of hoppers which convey the ingredients towards the turbine which, by turning, mixes them to obtain a homogeneous mixture.

Usually the ingredients comprises flour and water which constitute the essential elements of the dough.

The solutions of the prior art have several drawbacks.

In fact, the step of mixing the water with the flour is very delicate and must be performed with precision to prevent the formation of lumps, especially when the machine has to mix considerable quantities of flour and water.

To obtain a homogeneous dough, the machines of the prior art envisage pre-mixing steps of the components, essentially flour and water, so as to avoid powdery situations created by the state of the not yet wetted flour.

Following such pre-mixing, the procedure continues with the subsequent mixing at a greater speed of rotation of the turbine so as to complete making the mixture, with consequent formation of the gluten mesh.

Such machines of the prior art are rather slow at making the mixture and, in addition, do not permit optimal mixing of the flour and water.

In fact, current mixing machines do not guarantee the total hydration of the flour; the pre-mixing is conducted at low speed so as not to create clouds of flour. For such reason, pre-mixing at low speed does not ensure the best hydration possible of the flour. US 5 891 246 discloses a mixer machine according to the preamble of claim 1.

The purpose of the present invention is to make a mixing machine for mixing at least one substance in powder, such as flour, with at least one liquid, such as water, which overcomes the drawbacks mentioned with reference to the prior art.

Such drawbacks and limitations are resolved by a mixer machine according to claim 1 and by a mixing method according to claim 14.

Other embodiments of the mixer machine according to the invention are described in the remaining claims.

Further characteristics and advantages of the invention will be more clearly comprehensible from the description given below of its preferred embodiments, made by way of a non-limiting example, wherein:
figure 1 shows a simplified diagram of a mixer machine according to the invention;
figure 2 is a transversal cross-section of the machine in figure 1, in the mixing zone;
figure 3 shows, in axial cross-section, a mixer machine in one embodiment;
figure 4 is an axial cross-section of a mixer machine in one embodiment variation;
figure 5 is a perspective view of a mixer machine according to one embodiment of the present invention;
figure 6 is a cross-section view of the mixer machine in figure 5;
figure 7 is a perspective view of the detail III in figure 6; and
figure 8 is an enlarged view of the detail IV in figure 7.

The elements or parts of elements common to the embodiments described below will be indicated using the same reference numerals.

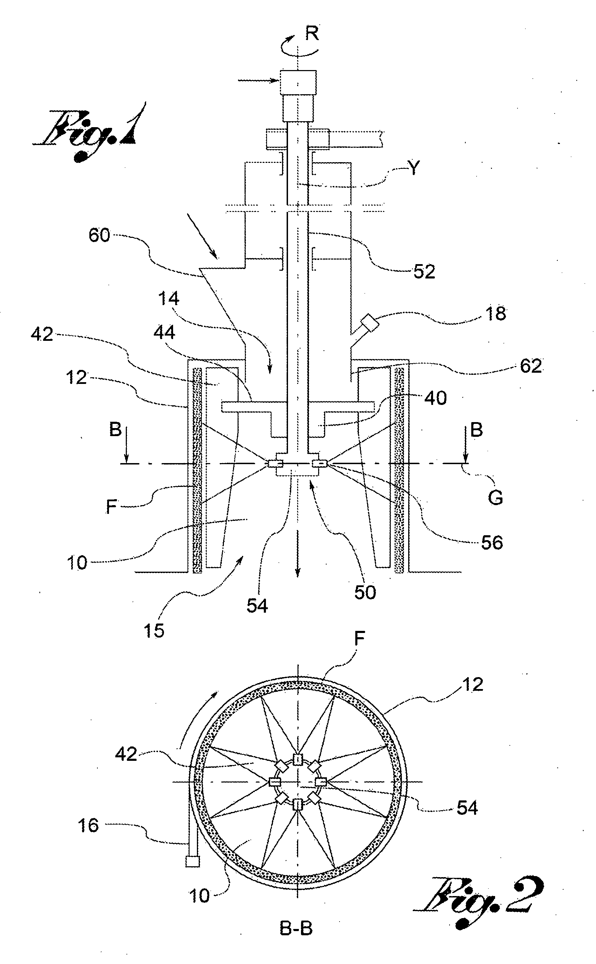

In a general embodiment shown in figures 1-3, a mixer machine for mixing at least one substance in powder with at least one liquid comprises a mixing chamber 10, which extends around a main axis Y substantially vertical or inclined. For example, the mixing chamber is a cylindrical, conical or cylindrical-conical shape. Said mixing chamber 10 is delimited by a side wall 12 and has an upper aperture 14 for the introduction of the substance in powder into the mixing chamber 10.

A turbine 40 is placed in the mixing chamber 10, with its rotation axis R coinciding with said main axis Y. The turbine 40 is susceptible to be placed in rotation in such a way as to generate a downward flow F of the substance in powder along the inner surface of the side wall 12 of the mixing chamber 10.

The mixer machine further comprises dispenser means of the liquid 50 suitable for generating at least one pressurised jet of nebulised liquid G directly against the inner surface of the side wall 12 of the mixing chamber 10, so as to cause an interaction between the particles of the substance in powder and the particles of the nebulised liquid having the effect of an instantaneous mixing of said substance with said liquid.

Consequently, innovatively, an instantaneous mixing of a substance in powder with a liquid is achieved generating a downward flow of the substance in powder, of an annular shape and reduced thickness, that is to say concentrated along the wall delimiting the mixing chamber, and directing against said wall a jet of nebulised liquid at high pressure, that is at high speed. In fact, when the particles of the substance in powder reach the nebulisation area of the liquid, said particles are projected by the particles of liquid arriving at high speed against the side wall 12 of the mixing chamber 10. The contact between said particles against the wall creates an instantaneous mixing of the powder/liquid.

The downward flow of the substance in powder is therefore generated by the action of the turbine 40 which, rotating at high speed, aspirates the particles of the substance in powder from the upper aperture 14, centrifuges them and places them in rotation along the side wall 12 of the mixing chamber 10.

Advantageously, the powder/liquid mixture formed may be made to come out in a continuous manner from the mixing chamber 10 through an exit aperture 15, for example opposite the upper aperture 14, by said rotation of the blades 42 of the turbine 40.

The thickness of the downward flow of the substance in powder is substantially equal to the distance between the inner surface of the side wall 12 of the mixing chamber 10 and the circumference radius defined by the rotation of the blades 42 of the turbine 40.

In a preferred embodiment, the liquid dispenser means 50 are susceptible to rotate around the main axis Y in such a way as to generate at least one rotating jet of nebulised liquid. More preferably, the speed of rotation of the dispenser means 50 is the same as the speed of rotation of the turbine 40. This way, the rotation of the blades 42 of the turbine 40 does not obstruct the formation and the emission of the jet of nebulised liquid.

In a preferred embodiment, the liquid dispenser means 50 comprise a hollow dispenser shaft 52 with its axis coinciding with said main axis Y and terminating inside the mixing chamber 10. The hollow dispenser shaft 52 terminates in said mixing chamber 10 with a distribution chamber 54 in which spray holes 56 are made for the exit of the nebulised jet.

In a preferred embodiment, the blades 42 of the turbine 40 are inclined, or twisted, in relation to the main axis Y.

According to one advantageous embodiment, the substance in powder is fed to the mixing chamber 10 through feed means 60 terminating in a collar 62 joined to the upper aperture 14 of the mixing chamber 10 and projecting into said chamber at least up to the height of the upper end of the blades 42 of the turbine 40. This way, said collar 62 and said blades 42 create a suction effect of the substance in powder. In other words, a Venturi effect is created at the entrance of the mixing chamber 10 which favours the formation of the downward flow F of the substance in powder.

In one embodiment, the mixing chamber 10 is provided with at least one tangential entrance 16 for the addition of at least one other liquid or solid substance to the mixture of the substance in powder and the liquid.

In addition, in one embodiment variation, the upper aperture 14 of the mixing chamber 10 communicates with an entrance duct 18 for the introduction into the mixing chamber of at least one gas.

In one advantageous embodiment the blades 42 of the turbine 40 are attached to a support plate 44 joined to said hollow dispenser shaft 52. In other words, advantageously, the rotation shaft of the turbine is also used as a feed duct of the liquid towards the distribution chamber 54 which the spray holes 56 are made in.

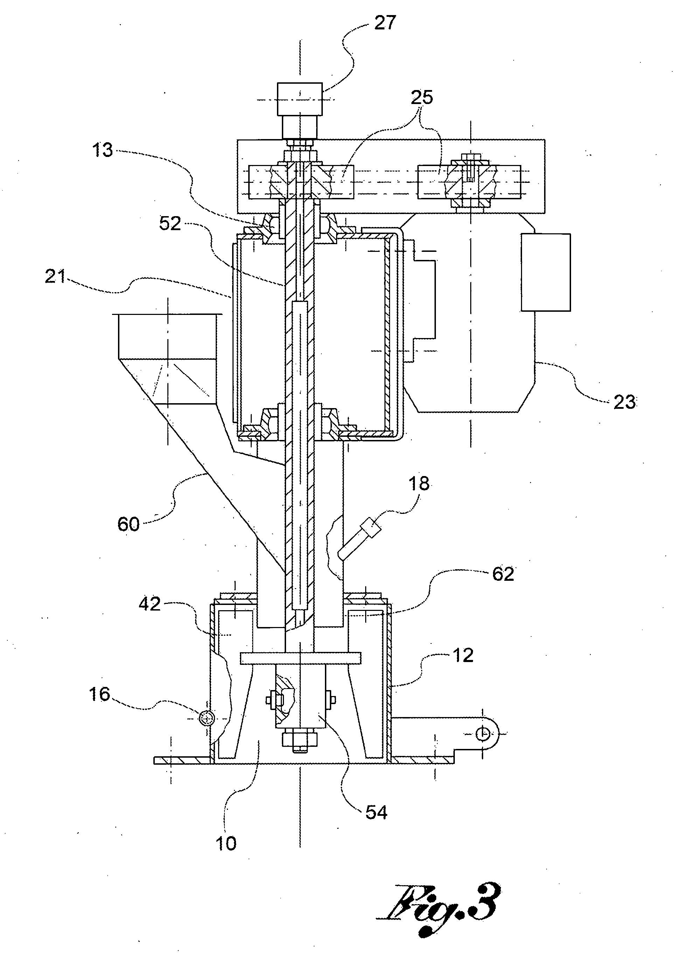

In one embodiment shown in figure 3, the hollow shaft 52 is supported by ball bearings 13 attached to a support 21 and moved in rotation by a motor device 23 by means of a pulley drive system 25. The hollow shaft 52 is fluidically fed by a liquids manifold 27, placed for example on the apex of said shaft.

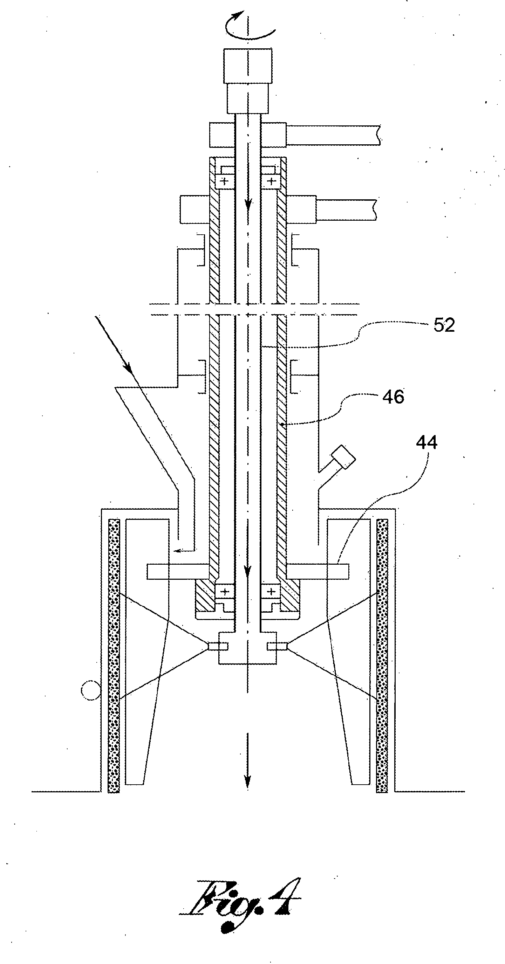

In one embodiment variation shown in figure 4, instead, the blades 42 of the turbine 40 are attached to a support plate 44 joined to a turbine shaft 46 rotating independently of the hollow dispenser shaft 52.

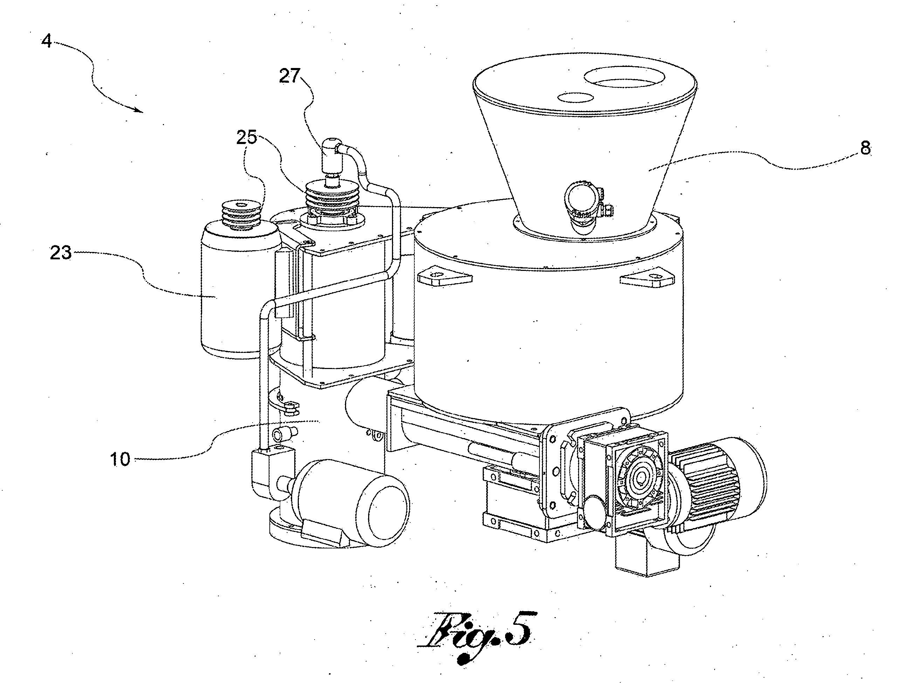

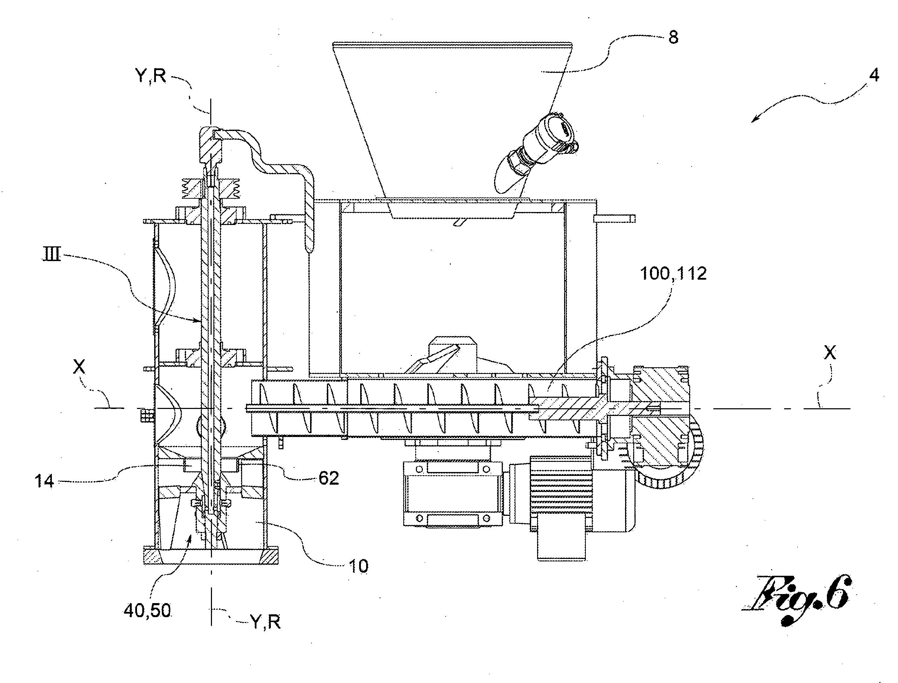

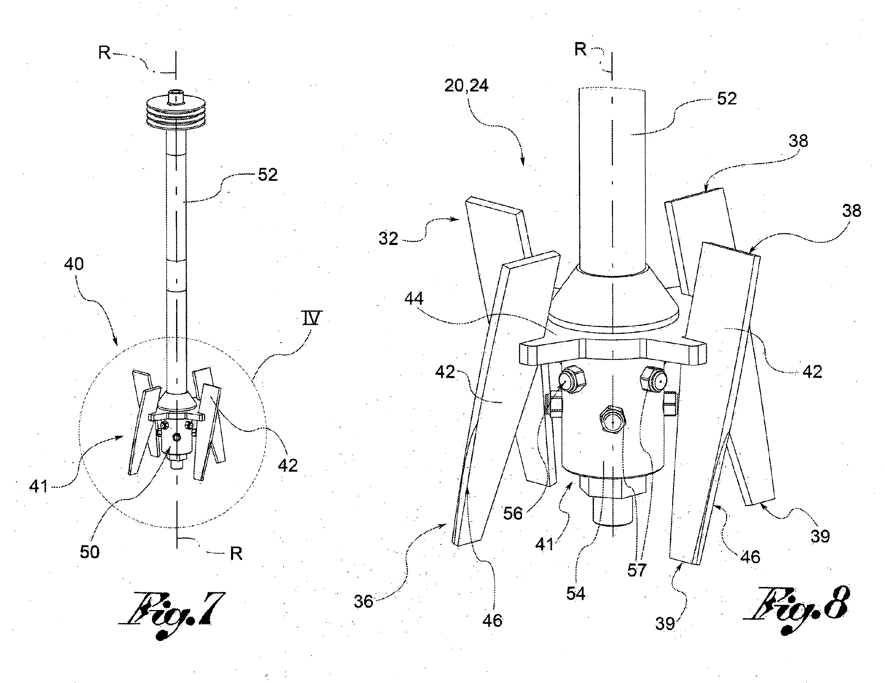

With reference to figures 5-8, a machine suitable for pre-mixing water and flour, which incorporates the concept of mixing a substance in powder with a liquid described above, will now be illustrated. The elements of the pre-mixing machine in common with the more general mixer machine described above will be indicated using the same reference numerals.

With reference to the aforementioned figures, reference numeral 4 globally denotes a pre-mixing machine suitable for mixing a mixture comprising ingredients such as at least flour and water.

Preferably, as described further below, flour having a granule size of up to 180 µm is used.

The pre-mixing machine 4 comprises a casing having a hopper 8 for loading the flour which is conveyed by gravity to the feed means 100 of the flour comprising, for example, a worm 112, with its own drive means, in the known manner. Obviously, other types of feed means of the flour may also be used, all comprised within the present invention.

According to one embodiment, said worm 112 is positioned along a conveying direction X-X, for example horizontal, so as to transport the flour coming from the hopper 8 along said conveying direction X-X for the subsequent steps of processing.

The pre-mixing machine 4 further comprises a mixing chamber 10 suitable for receiving and mixing the ingredients to be mixed.

The mixing chamber 10 is connected to the worm 12 so as to receive the flour from it.

According to one embodiment, the mixing chamber 10 has a main vertical axis Y-Y extension, perpendicular to the conveying direction X-X.

This way, the flour, pushed by the worm 112, reaches the mixing chamber 10 and falls into it as a result of gravity.

Inside the mixing chamber 10 there are mixing means, rotating around a mixing axis R-R, so as to mix the ingredients inside the mixing chamber. Said mixing axis is preferably parallel to the vertical axis Y-Y of the mixing chamber 10 and is perpendicular to the conveying direction X-X.

According to one embodiment, the mixing means comprise a turbine 40 having a vertical rotation axis, said turbine 40 being positioned under the feed means 100 of the flour, so as to receive the flour by gravity.

According to one embodiment, the mixing means comprise a head 41 fitted with blades 42.

The feed means 100 of the flour, communicate with the mixing chamber 10 through an upper aperture 14 of the mixing chamber. A collar 62 is joined to said upper aperture 14 which forms a sort of funnel for the descent of the flour into the mixing chamber 10 and which projects inside said chamber at least as far as the level of the top 32 of the blades 42 of the turbine 40.

For example, said blades 42 have a planar shaper which tapers moving from an entrance or upper portion 32, to an exit or lower portion 36 of the turbine 40. In other words, the blades 42 have an attachment or upper rim 38 at the entrance portion 32 greater than an exit or lower rim 39 at the exit portion 36.

Preferably, the shape of the blades 42 is such as to further pulverise the flour. For example, the blades 42 may envisage ridges or cutting edges 46 which facilitate the pulverisation of the flour.

Preferably, the turbine 40 is a high rotation speed turbine, from 2000 to 4000 rpm, preferably equal to about 3000 rpm.

The blades 42 may be planar bodies or may be twisted along their axial extension, parallel to said rotation axis R-R.

In addition, the blades 42 may be rigidly constrained to the head 41 of the turbine 40, for example by means of a support plate 44, or may be fitted onto the turbine 40 so as to have a variable angle of incidence to the mixing axis R-R: in other words, it may be envisaged that the blades 42 may rotate in relation to the head so as to vary the angle of incidence and thereby the depression effect and relative suction acting on the flour.

Advantageously, the pre-mixing machine 4 comprises dispenser means of the water 50 suitable for nebulising the water so as to spray into the mixing chamber 10 particles of water having a dimension substantially equal to the particle size of said flour to be mixed.

According to one embodiment, said dispenser means of the water 50 comprise a plurality of dispenser nozzles 57 fitted with spray holes 56 having a diameter such as to nebulise particles of water substantially equal to the particle size of the flour to be mixed.

Preferably, the water dispenser means 50 comprise a hollow dispenser shaft 52 of the water coinciding with the shaft driving the turbine 40; for example, the passage inside the hollow dispenser shaft 52 is fluidically connected with the nozzles 57 at a distribution chamber 54 made in the head 41 of the turbine 40, next to the blades 42.

According to one embodiment, the diameter of said dispenser holes 56 is such as to cause the nebulisation of the liquid in drops of 80 to 180 µm in diameter.

According to one embodiment, the water is sent to the spray hole 56 at a pressure of 10 to 18 bar and, preferably, 12 to 15 bar.

For example, the nozzles 57 are positioned in the distribution chamber 54 so as to prove angularly equidistant in relation thereto.

Preferably, the distribution chamber 54 rotates in relation to said mixing axis R-R.

For example, the nozzles 57 are joined in rotation to the mixing means and in particular to the head 41 of the turbine 40.

Preferably, the dispenser nozzles 57 are positioned at said blades 42 of the turbine, so as to nebulise the particles of water at the blades 42, in an area influenced by the depression created by said blades.

Obviously in the mixing chamber 10 further components may be introduced and mixed in the same mixture. For example, it is possible to introduce yeast and similar ingredients depending on the intended use of the mixture.

The method of mixing a mixture using a pre-mixing machine according to the invention will now be described.

In particular, flour is fed through the hopper 8 and the mixer means 100, such as for example the worm 112, which pushes the flour to fall inside the mixing chamber 10.

The flour falls by gravity into the collar 62 at the entrance of the mixing chamber 10.

Thanks to the high speed rotation of the turbine, from 2000 to 4000 rpm and preferably equal to about 3000 rpm, a turbulence is created which generates a depression downstream of the turbine 24 which facilitates the suction of the flour.

By rotating at high speed the turbine 24 creates as described a downward flow of flour along the side wall 12 which delimits the mixing chamber 10. In addition, the turbine has the effect of further pulverising the flour so that it has as homogeneous a particle size as possible. The further pulverisation of the flour occurs above all on the percentage of granules of over 120 µm (about 30%), the only ones having sufficient mass to undergo the mechanical effect of the high speed blades of the turbine.

Advantageously, the water is supplied by use of the dispenser means of the water suitable for nebulising the water so as to spray into the mixing chamber 10, against the side wall thereof, particles of water having a dimension substantially equal to the particle size of said flour. This makes the interaction between the particles of flour and the particles of water even more efficient for the purposes of an instantaneous mixing of the flour and water. In particular, such nebulisation is facilitated by the depression created by the rotation of the turbine 40, as well as by the characteristics of the nozzles 57.

It is to be noted that, the nebulisation of the water and its interaction with the particles of flour takes place in part thanks to the fact that the water is sent to the water dispenser means at high pressure, between 12 and 15 bar.

In brief, in the mixer machine according to the invention all the functions leading to the mixing of the powders and liquids take place in the mixing chamber solely at the hands of the turbine. The upper part of the mixing chamber is suitable for aspirating and centrifuging the powders. The functioning of this portion of the machine is comparable to that of a fan.

The collar 62 joined to the upper aperture 14 of the mixing chamber 10, which preferably extends to the level of or even lower than the upper end of the blades, ensures optimal suction of the air and powders. The upper part of the turbine blades, which extends above the support plate, aspirates the air and powders which enter through the upper aperture 14. The turbine blades extend under the support plate 44 and are preferably inclined so as to create a downward flow of powder along the walls of the mixing chamber.

Thanks to the spray nozzles provided on the hub of the turbine, between the blades thereof, the liquid is nebulised at high pressure and projected at high speed onto the downward flow of the substance in powder. This is what creates the instantaneous mixing. In other words, the substance in powder does not fall by gravity into the nebulised liquid, but the nebulised liquid is projected against the flow of the substance in powder while it is aspirated and generated by the turbine blades. Such effect is achieved by positioning the spray nozzles between the blades, in an intermediate position between their lower and upper ends.

In addition, the lower part of the blades, which extends that is to say below the spray nozzles, works the mixture previously formed in the mixing zone. Consequently, at the exit of the mixing chamber the mixture is worked thanks to the action of the lower portion of the blades.

All the functions ensuring the formation of a homogeneous mixture of the products are thereby performed by the turbine. In particular, the turbine:
- aspirates and centrifuges the powders;
- creates a downward flow of the substance in powder along the inner wall of the mixing chamber;
- pulverises the liquids at high speed onto the downward flow of the substance in powder;
- works the mixture and makes it come out of the mixing chamber thanks to the lower portion of the blades.

As may be seen from the description, the present invention makes it possible to overcome the drawbacks mentioned with reference to the prior art.

In particular, the pre-mixing machine of the present invention makes it possible to obtain the mixture in a shorter time than the solutions of the prior art: in fact, conversely to the solutions of the prior art, it envisages performance of the pre-mixing at a high rotation speed of the turbine.

In addition, it has been seen that the present invention makes it possible to prepare mixtures with a flour/water proportion with percentages of water to flour 2-6% higher than the traditional pre-mixing systems of current mixers.

For example, if 100 kg of flour is used, thanks to the present invention 63 kg of water can be mixed with it, to obtain a total of 163 kg of mixture, against the 160 kg of mixture which can be obtained using the machines of the prior art.

In other words, for the same type and quantity of flour the machine according to the invention is able to mix in a greater quantity of water and thereby produce a greater quantity of mixture.

The yield of the mixing is higher therefore and despite a greater mass of mixture being obtained, the mixing times are reduced thanks to the high speed rotation of the turbine.

A person skilled in the art may make numerous modifications and variations to the mixing machines described above so as to satisfy contingent and specific requirements, while remaining within the scope of protection of the invention as defined by the following claims.

## Claims

1. Mixer machine for mixing at least one substance in powder with at least one liquid, comprising:
- a mixing chamber (10) which extends around a main axis (Y) substantially vertical or inclined, said mixing chamber being delimited by a side wall (12) and having an upper aperture (14) for the introduction of the substance in powder into the mixing chamber;
- a turbine (40) placed in said mixing chamber (10) with its rotation axis (R) coinciding with said main axis (Y), said turbine being susceptible to be placed in rotation in such a way as to generate a downward flow of the substance in powder along the inner surface of said side wall (12) of said mixing chamber, and
- dispenser means (50) of the liquid suitable to generate at least one pressurised jet of liquid nebulised directly against said inner surface, so as to cause an interaction between the particles of the substance in powder and the particles of the nebulised liquid having the effect of an instantaneous mixing of said substance with said liquid; said turbine (40) comprising turbine blades (42), said mixer machine being **characterized in that** spray nozzles (57) of said dispenser means (50) provided on the hub of the turbine are positioned between the turbine blades (42) in an intermediate position between upper (32) and 4 lower (36) ends of said blades.

2. Machine according to claim 1, wherein said downward flowing substance in powder flows through a space substantially equal to the distance between the inner surface of the side wall (12) of the mixing chamber (10) and the circumference radius defined by the rotation of the turbine blades (42).

3. Machine according to claim 1 or 2, wherein said liquid dispenser means (50) are susceptible to rotate around said main axis (Y) in such a way as to generate at least one rotating jet of nebulised liquid.

4. Machine according to any of the previous claims, wherein said liquid dispenser means (50) comprise a hollow dispenser shaft (52) with its axis coinciding with said main axis (Y) terminating inside the mixing chamber (10) in a distribution chamber (54) in which spray holes (56) are made for the exit of the nebulised jet.

5. Machine according to any of the previous claims, wherein the turbine blades (42) are inclined in relation to the main axis (Y).

6. Machine according to any of the previous claims, wherein the substance in powder is fed to the mixing chamber (10) through feed means (60) terminating in a collar (62) joined to the upper aperture (14) and projecting into said chamber at least up to the height of the upper end of the turbine blades (42), so that said collar and said blades (42) create a suction effect of the substance in powder.

7. Machine according to any of the previous claims, wherein the mixing chamber (10) is a cylindrical, conical or cylindrical-conical shape.

8. Machine according to any of the previous claims, wherein the mixing chamber (10) is provided with at least one tangential entrance (16) for the addition of at least one other liquid or solid substance to the mixture of the substance in powder and the liquid.

9. Machine according to any of the previous claims, wherein the upper aperture (14) of the mixing chamber (10) communicates with an entry duct (18) for the introduction into the mixing chamber of at least one gas.

10. Machine according to any of the claims 4-9, wherein the turbine blades (42) are attached to a support plate (44) joined to said hollow dispenser shaft (52).

11. Machine according to any of the claims 4-9, wherein the turbine blades (42) are attached to a support plate (44) joined to a turbine shaft (46) rotating independently of the hollow dispenser shaft (52).

12. Machine according to any of the previous claims, wherein the liquid is sent to the dispenser means (50) at a pressure of 10 to 18 bar and, preferably, 12 to 15 bar.

13. Machine according to any of the previous claims when depending from claim 4, wherein the dispenser holes (56) are made in the distribution chamber (54) angularly equally spaced around the main axis (Y).

14. Mixing method for mixing at least one substance in powder with at least one liquid using the mixer machine according to any of claims 1-13, comprising the steps of:
- generating, inside the mixing chamber (10) delimited by a side wall (12) and extending between an entrance aperture (14) and an exit aperture (15), a flow of the substance in powder of reduced thickness along said side wall, from the entrance aperture towards the exit aperture;
- directing towards said flow against said side wall (12) at least one jet of nebulised liquid at high pressure, or at high speed, so as to cause an interaction between the particles of the substance in powder and the particles of the nebulised liquid having the effect of an instantaneous mixing of said substance with said liquid; wherein the step of directing is performed through a turbine (40) comprising turbine blades (42), wherein dispensing spray nozzles (57) provided on the hub of the turbine are positioned between the turbine blades (42) in an intermediate position between upper (32) and lower (36) ends of said blades.

15. Method according to the previous claim, wherein the flow of the substance in powder is generated by the rotation of a turbine (40) placed in said mixing chamber (10).

16. Method according to the previous claim, wherein the at least one jet of nebulised liquid is dispensed by the dispenser means (50) rotating at the same speed and in the same direction as the turbine (40).

17. Method according to claim 15 or 16, wherein the substance in powder is introduced into the mixing chamber (10) thanks to the suction effect produced by the rotation of the turbine (40).

## Patentansprüche

1. Mischmaschine zum Mischen wenigstens einer Substanz in Pulverform mit wenigstens einer Flüssigkeit, die umfasst:
- eine Mischkammer (10), die sich um eine Hauptachse (Y), die im Wesentlichen vertikal oder geneigt ist, erstreckt, wobei die Mischkammer durch eine Seitenwand (12) begrenzt ist und eine obere Öffnung (14) für das Einführen der Substanz in Pulverform in die Mischkammer hat;
- eine Turbine (40), die in der Mischkammer (10) angeordnet ist, wobei ihre Drehachse (R) mit der Hauptachse (Y) zusammenfällt, wobei die Turbine beeinflussbar ist, um derart in eine Drehung versetzt zu werden, dass sie einen Abwärtsfluss der Substanz in Pulverform entlang der Innenfläche der Seitenwand (12) der Mischkammer erzeugt, und
- Abgabemittel (50) für die Flüssigkeit, das geeignet sind, wenigstens einen unter Druck stehenden Strahl von zerstäubter Flüssigkeit direkt gegen die Innenfläche zu erzeugen, um eine Wechselwirkung zwischen den Partikeln der Substanz in Pulverform und den Partikeln der zerstäubten Flüssigkeit zu bewirken, was die Wirkung einer sofortigen Vermischung der Substanz mit der Flüssigkeit hat;
wobei die Turbine (40) Turbinenschaufeln (42) umfasst, wobei die Mischmaschine **dadurch gekennzeichnet ist, dass** Sprühdüsen (57) der Abgabemittel (50), die auf der Nabe der Turbine bereitgestellt sind, zwischen den Turbinenschaufeln (42) in einer Zwischenposition zwischen oberen (32) und unteren (36) Enden der Schaufeln positioniert sind.

2. Maschine nach Anspruch 1, wobei die abwärts fließende Substanz in Pulverform durch einen Raum fließt, der im Wesentlichen gleich dem Abstand zwischen der Innenfläche der Seitenwand (12) der Mischkammer (10) und dem Umfangsradius ist, der durch die Drehung der Turbinenschaufeln definiert wird.

3. Maschine nach Anspruch 1 oder 2, wobei die Flüssigkeitsabgabemittel (50) beeinflussbar sind, so dass sie sich derart um die Hauptachse (Y) drehen, dass sie wenigstens einen sich drehenden Strahl aus zerstäubter Flüssigkeit erzeugen

4. Maschine nach einem der vorhergehenden Ansprüche, wobei die Flüssigkeitsabgabemittel (50) eine hohle Abgabewelle (52) umfassen, deren Achse mit der Hauptachse (Y) zusammenfällt, die im Inneren der Mischkammer (10) in einer Verteilungskammer (54) endet, in der Sprühlöcher (56) für den Austritt des zerstäubten Strahls gefertigt sind.

5. Maschine nach einem der vorangehenden Ansprüche, wobei die Turbinenschaufeln (42) in Bezug auf die Hauptachse (Y) geneigt sind.

6. Maschine nach einem der vorangehenden Ansprüche, wobei die Substanz in Pulverform durch Zuführungsmittel (60), die in einer mit der oberen Öffnung (14) verbundenen Manschette (62) enden und wenigstens bis zu der Höhe des oberen Endes der Turbinenschaufeln (42) in die Kammer vorstehen, an die Mischkammer (10) zugeführt wird, so dass die Manschette und die Schaufeln (42) eine Sogwirkung für das Substrat in Pulverform erzeugen.

7. Maschine nach einem der vorhergehenden Ansprüche, wobei die Mischkammer (10) eine zylindrische, konische oder zylindrisch-konische Form hat.

8. Maschine nach einem der vorhergehenden Ansprüche, wobei die Mischkammer (10) mit wenigstens einem tangentialen Eingang (16) für die Zugabe wenigstens einer anderen flüssigen oder festen Substanz zu der Mischung der Substanz in Pulverform und der Flüssigkeit versehen ist.

9. Maschine nach einem der vorhergehenden Ansprüche, wobei die obere Öffnung (14) der Mischkamer (10) mit einem Eingangskanal (18) für die Einleitung wenigstens eines Gases in die Mischkammer in Verbindung steht.

10. Maschine nach einem der Ansprüche 4 - 9, wobei die Turbinenschaufeln (42) an einer Halteplatte (44) befestigt sind, die mit der hohlen Abgabewelle (52) verbunden ist.

11. Maschine nach einem der Ansprüche 4 - 9, wobei die Turbinenschaufeln (42) an einer Halteplatte (44) befestigt ist, die mit einer Turbinenwelle (46) verbunden ist, die sich unabhängig von der hohlen Abgabewelle (52) dreht.

12. Maschine nach einem der vorangehenden Ansprüche, wobei die Flüssigkeit mit einem Druck von 10 bis 18 Bar und vorzugsweise 12 bis 15 Bar an die Abgabemittel (50) befördert wird.

13. Maschine nach einem der vorangehenden Ansprüche in Abhängigkeit von Anspruch 4, wobei die Abgabelöcher (56) in der Verteilungskammer (54) dem Winkel nach um die Hauptachse (Y) beabstandet sind.

14. Mischverfahren zum Mischen wenigstens einer Substanz in Pulverform mit wenigstens einer Flüssigkeit unter Verwendung der Mischmaschine nach einem der Ansprüche 1 - 13, das die folgenden Schritte umfasst:
- Erzeugen eines Flusses der Substanz in Pulverform mit verringerter Dicke entlang der Seitenwand von einer Eingangsöffnung (14) in Richtung einer Ausgangsöffnung (15) in der Mischkammer (10), die durch eine Seitenwand (12) begrenzt ist und sich zwischen der Eingangsöffnung und der Ausgangsöffnung erstreckt;
- Ausrichten wenigstens eines Strahl von zerstäubter Flüssigkeit mit hohem Druck oder mit hoher Geschwindigkeit gegen die Seitenwand (12), um eine Wechselwirkung zwischen den Partikeln der Substanz in Pulverform und den Partikeln der zerstäubten Flüssigkeit zu bewirken, was die Wirkung einer sofortigen Vermischung der Substanz mit der Flüssigkeit hat;
wobei der Schritt des Ausrichtens durch eine Turbine (40) durchgeführt wird, die Turbinenschaufeln (42) umfasst, wobei Abgabesprühdüsen (57), die auf der Nabe der Turbine bereitgestellt sind, zwischen den Turbinenschaufeln (42) in einer Zwischenposition zwischen oberen (32) und unteren (36) Enden der Schaufeln positioniert sind.

15. Verfahren nach einem der vorangehenden Ansprüche, wobei der Fluss der Substanz in Pulverform durch die Drehung einer Turbine (40) erzeugt wird, die in der Mischkammer (10) angeordnet ist.

16. Verfahren nach einem der vorangehenden Ansprüche, wobei wenigstens ein Strahl aus zerstäubter Flüssigkeit von den Abgabemitteln (50) abgegeben wird, die sich mit der gleichen Geschwindigkeit und die in gleiche Richtung wie die Turbine (40) drehen.

17. Verfahren nach Anspruch 15 oder 16, wobei die Substanz in Pulverform Dank der durch die Drehung der Turbine (40) erzeugten Sogwirkung in die Mischkammer (10) eingeführt wird.

## Revendications

1. Machine mélangeuse pour mélanger au moins une substance en poudre avec au moins un liquide, comprenant :
- une chambre de mélange (10) qui entoure un axe principal (Y) sensiblement vertical ou incliné, ladite chambre de mélange étant délimitée par une paroi latérale (12) et possédant une ouverture supérieure (14) pour l'introduction de la substance en poudre dans la chambre de mélange;
- une turbine (40) placée dans ladite chambre de mélange (10) et dont l'axe de rotation (R) coïncide avec ledit axe principal (Y), ladite turbine pouvant être mise en rotation de façon à produire un écoulement vers le bas de la substance en poudre le long de la surface intérieure de ladite paroi latérale (12) de ladite chambre de mélange, et
- des moyens distributeurs (50) du liquide pouvant produire au moins un jet sous pression de liquide nébulisé directement contre ladite surface intérieure, de façon à provoquer une interaction entre les particules de la substance en poudre et les particules du liquide nébulisé avec pour effet un mélange instantané de ladite substance avec ledit liquide ;
ladite turbine (40) comprenant des pales de turbine (42), **caractérisée en ce que** des buses de pulvérisation (57) desdits moyens distributeurs (50) prévues sur le moyeu de la turbine sont positionnées entre les pales de turbine (42) dans une position intermédiaire entre des extrémités supérieures (32) et inférieures (36) desdites pales.

2. Machine selon la revendication 1, dans laquelle ladite substance en poudre s'écoulant vers le bas s'écoule à travers un espace sensiblement égal à la distance entre la surface intérieure de la paroi latérale (12) de la chambre de mélange (10) et le rayon de la circonférence définie par la rotation des pales de turbine (42).

3. Machine selon la revendication 1 ou 2, dans laquelle lesdits moyens distributeurs de liquide (50) peuvent tourner autour dudit axe principal (Y) de manière à produire au moins un jet rotatif de liquide nébulisé.

4. Machine selon l'une quelconque des revendications précédentes, dans laquelle lesdits moyens distributeurs de liquide (50) comprennent un arbre distributeur creux (52) dont l'axe coïncide avec ledit axe principal (Y) et se termine à l'intérieur de la chambre de mélange (10) dans une chambre de distribution (54) dans laquelle des trous de pulvérisation (56) sont formés pour la sortie du jet nébulisé.

5. Machine selon l'une quelconque des revendications précédentes, dans laquelle les pales de turbine (42) sont inclinées par rapport à l'axe principal (Y).

6. Machine selon l'une quelconque des revendications précédentes, dans laquelle la substance en poudre est amenée à la chambre de mélange (10) par des moyens d'alimentation (60) se terminant par un collet (62) assemblé à l'ouverture supérieure (14) et dépassant dans ladite chambre au moins jusqu'à la hauteur de l'extrémité supérieure des pales de turbine (42), de sorte que ledit collet et lesdites pales (42) créent un effet d'aspiration de la substance en poudre.

7. Machine selon l'une quelconque des revendications précédentes, dans laquelle la chambre de mélange (10) est de forme cylindrique, conique ou cylindro-conique.

8. Machine selon l'une quelconque des revendications précédentes, dans laquelle la chambre de mélange (10) est pourvue d'au moins une entrée (16) tangentielle pour l'ajout d'au moins une autre substance solide ou liquide au mélange de la substance en poudre et du liquide.

9. Machine selon l'une quelconque des revendications précédentes, dans laquelle l'ouverture supérieure (14) de la chambre de mélange (10) communique avec une conduite d'entrée (18) pour l'introduction d'au moins un gaz dans la chambre de mélange.

10. Machine selon l'une quelconque des revendications précédentes, dans laquelle les pales de turbine (42) sont fixées à une plaque de support (44) assemblée audit arbre distributeur creux (52).

11. Machine selon l'une quelconque des revendications 4 à 9, dans laquelle les pales de turbine (42) sont fixées à une plaque de support (44) assemblée à un arbre de turbine (46) qui tourne indépendamment de l'arbre distributeur creux (52).

12. Machine selon l'une quelconque des revendications précédentes, dans laquelle le liquide est envoyé aux moyens distributeurs (50) sous une pression de 10 à 18 bars et, de préférence, de 12 à 15 bars.

13. Machine selon l'une quelconque des revendications précédentes dépendant de la revendication 4, dans laquelle les trous de distribution (56) sont formés dans la chambre de distribution (54) avec un écartement angulaire égal autour de l'axe principal (Y).

14. Procédé de mélange pour mélanger au moins une substance en poudre avec au moins un liquide à l'aide de la machine mélangeuse selon l'une quelconque des revendications 1 à 13, comprenant les étapes de:
- création, à l'intérieur de la chambre de mélange (10) délimitée par une paroi latérale (12) et s'étendant entre une ouverture d'entrée (14) et une ouverture de sortie (15), d'un écoulement de la substance en poudre d'épaisseur réduite le long de ladite paroi latérale, de l'ouverture d'entrée vers l'ouverture de sortie ;
- orientation vers ledit écoulement contre ladite paroi latérale (12) d'au moins un jet de liquide nébulisé sous haute pression ou à grande vitesse, afin de provoquer une interaction entre les particules de la substance en poudre et les particules du liquide nébulisé avec pour effet un mélange instantané de ladite substance avec ledit liquide ;
dans lequel l'étape d'orientation est réalisée à travers une turbine (40) comprenant des pales de turbine (42), des buses de pulvérisation de distribution (57) prévues sur le moyeu de la turbine étant positionnées entre les pales de turbine (42) dans une position intermédiaire entre des extrémités supérieures (32) et inférieures (36) desdites pales.

15. Procédé selon la revendication précédente, dans lequel l'écoulement de la substance en poudre est produit par la rotation d'une turbine (40) placée dans ladite chambre de mélange (10).

16. Procédé selon la revendication précédente, dans lequel l'au moins un jet de liquide nébulisé est distribué par les moyens distributeurs (50) tournant à la même vitesse et dans le même sens que la turbine (40).

17. Procédé selon la revendication 15 ou 16, dans lequel la substance en poudre est introduite dans la chambre de mélange (10) grâce à l'effet d'aspiration produit par la rotation de la turbine (40).
